# EUROPEAN PATENT APPLICATION

(11) **EP 3 364 311 A1**
(43) Date of publication of application: **22.08.2018**
(21) Application number: 17156384.4
(22) Date of filing: 15.02.2017
(51) Int. Cl.: G06F 17/30, G09B 5/00

(54) **VISUALISATION SYSTEM**

(71) Applicant: Televic Education NV, 8870 Izegem (BE)
(72) Inventor: VENANT, Sylvie, B-8940 Wervik (BE); DE DONDER, Xavier, B-8870 Izegem (BE)
(74) Representative: Beck, Michaël Andries T.

(57) **Abstract**

The invention refers to visualisation system for annotating a source message, comprising a source module, provided with a first interface for displaying said source message, an annotation module, provided with a second interface for recording and displaying a first annotation of said source message, and a time display module, provided with a third interface for indicating a time lapse. The source message is linked to said time lapse, thereby providing portions of said source message with respective durations defined by a starting position and an ending position in said time lapse. The pace of annotating said source message is dynamically controllable by the user of the system.

## Description

### Field of the Invention

The present invention relates to a visualisation system for applying annotation to a source message. The pace for annotating said source message is dynamically controlled by the user of the visualisation system, allowing the annotation to be synchronized with the source message. Thereto, a duration is assigned to the source message, wherein said duration can be adjusted to maintain a synchronous annotation. More in particular, the present invention relates to a visualisation system for sign language learning.

### Background

The documents "LogiSignes - explication" and "LogiSignes - presentation" (both retrieved from https://www.irit.fr/presto/resultats.html on 27 January 2017) disclose a visualisation system which allows to annotate a first video sequence from a source file with additional video sequences. The system allows for both synchronous and consecutive annotation and also permits to add further comments and symbols in text format to the first video sequence. It is the goal of the visualisation system to give sign language teachers the opportunity to react on, or to correct, video sequences recorded by their students. The visualisation system does not provide the system user with the possibility to control the pace of annotation and thus adjust the duration of an annotation while still retaining a synchronous annotation in sign language of a source message.

The document "Manual-elan_ug" (retrieved from http://www.mpi.nl/corpus/manuals/manual-elan ug.pdf on 27 January 2017) discloses an annotation tool that allows to create, edit, visualize and search annotations for video and audio data. An annotation is hereby understood to be any type of text which is linked to a selected time interval of the audio/video file. The tool can be used for orthographic and/or phonetic transcription with the aim of language analysis. The document discloses that the rate at which the video or audio data are played, can be adjusted. The annotation tool does however not provide for the possibility to interpret a source file in sign language. As such, it is not disclosed that interpretation in sign language of the source data can be synchronised to said source data by dynamically controlling its speed of display.

### Summary of the Invention

According to an aspect of the present invention, there is provided a visualisation system for annotating a source message, comprising
- a source module, provided with a first interface for displaying said source message,
- an annotation module, provided with a second interface for recording and displaying a first annotation of said source message;
- a time display module, provided with a third interface for indicating a time lapse;
wherein said source message is linked to said time lapse, thereby providing portions of said source message with respective durations defined by a starting position and an ending position in said time lapse; and the pace of annotating said source message is dynamically controllable by the user of the system.

It is an advantage of the present invention that a duration or time lapse can be assigned to the source message as well as to portions thereof, as this has the effect that a playback speed for the source message and thus a pace of annotation can be defined. It is a further advantage of the present invention that the user can have dynamic control of said pace for annotation. The user can thus control the pace at which his interpretation in sign language of said source message is recorded. Said control allows for the recorded annotations to be synchronised with the source message, even if the time needed for recording an annotation of a portion of the source message, is higher than the duration assigned to said portion.

In an embodiment, the visualisation system according to the present invention further comprises a feedback module, provided with a fourth interface for recording and displaying a second annotation to said first annotation in the form of text, audio or video images.

It is an advantage of this embodiment that this allows to add further comments to the source message or to a first annotation. The feedback module is typically used by the sign language teacher for correcting or commenting on an annotation done by a student.

In an embodiment of the system according to the present invention, the source message is in the form of video images, and the annotation is in the form of text, audio or video images.

It is an advantage of this embodiment that this allows the sign language student to annotate in sign language a source message which is a video sequence. The embodiment also allows to translate a source message in sign language, which is a video sequence, to text or audio.

In an embodiment of the system according to the present invention, the source message is in the form of audio or text, and the annotation is in the form of video images.

It is an advantage of this embodiment that this allows the sign language student to annotate a source message in audio or text format, in sign language.

In an embodiment of the system according to the present invention, the source message is a text, which is divided in a plurality of basic units. The time lapse is likewise divided in a plurality of basic time intervals. Each basic unit is linkable to a corresponding basic time interval. As a result, each position in said source text has a corresponding position in said time lapse.

It is an advantage of this embodiment that this allows to allocate a time duration to the smallest units which constitute the text of the source message. It will be clear that the duration of the text equals the sum of durations of said basic time intervals.

In an embodiment of the system according to the present invention, the said basic unit is a text character.

In an embodiment of the system according to the present invention, a natural or standard pace of annotation of the text of the source message corresponds with a basic time interval having a duration of 60ms per text character.

It is an advantage of this embodiment that a basic time interval of 60ms per text character has as an effect that the text of the source message can be annotated by default in a tempo which is perceived by an experienced user as standard, average and natural.

In an embodiment of the system according to the present invention, the source module further comprises a moveable position indicator for indicating a position in the text of the source message. In an embodiment of the system according to the present invention, the visualisation system further comprises a controller for controlling the pace of annotation.

It is an advantage of this embodiment that the user can control the pace of annotation, as this allows for synchronous annotation.

In an embodiment of the system according to the present invention, the controller for controlling the pace of annotation comprises a system for tracking eye movement.

It is an advantage of this embodiment that the user can rely on a system for following his progress in the text and for automatically adjusting the pace of annotation.

In an embodiment of the system according to the present invention, the controller for controlling the pace of annotation comprises at least one pedal for manipulation by foot.

It is an advantage of this embodiment that the user can actively control the pace of annotation by his own motions, as this gives him the sense of direct control of the pace.

In an embodiment of the system according to the present invention, the annotation is synchronous.

In an embodiment of the system according to the present invention, the annotation is consecutive.

According to an aspect of the present invention, there is provided a computer program product comprising code means configured to cause a processor to perform the functions of said visualisation system as described here above.

The technical effects and advantages of embodiments of the computer program product according to the present invention correspond *mutatis mutandis* to those of the corresponding embodiments of the system according to the invention.

### Brief Description of the Figures

These and other features and advantages of embodiments of the present invention will now be described in more detail with reference to the accompanying drawings, in which:
- Figure 1 schematically illustrates a visualisation system according to an embodiment of the present invention;
- Figure 2a and 2b schematically illustrate dynamic control of the pace of annotation; and
- Figure 3a and 3b schematically illustrate consecutive annotation by use of the visualisation system.

### Detailed Description of Embodiments

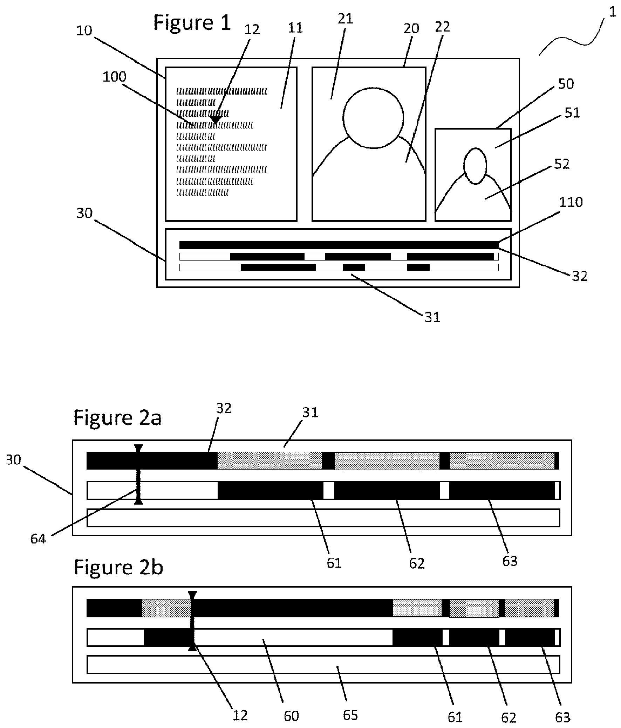

Figure 1 schematically illustrates a visualisation system **1** according to an embodiment of the invention.

A specific application of the visualisation system **1** described herein is as support tool for students who are learning sign language. Where appropriate, the invention will be described with reference to such a support tool, without intent to limit the scope of the invention to such applications.
In the context of a support tool, said visualisation system **1** is used to enable students to interpret a source message in sign language, or to transcript a source message **100** in sign language to another format. A student who is at the stage of learning to interpret a message in sign language, will not be able to interpret such a source message **100** fluently, as some, more complicated, parts of the source message **100** may take more time to interpret.

It is a goal of embodiments of the invention to provide for a visualisation system **1** which allows users of the system, such as students in sign language and their teachers, to control the pace at which annotation has to be made. For the purpose of the invention, the term "annotation" refers to the interpretation of a source message **100** in sign language, meaning providing a transcription of such a message to sign language. The term "annotation" can also refer to a transcription of a source message which is in sign language, to a different format. Said annotation does not necessarily have to correspond to the complete source message **100,** but may be linked to a selected time interval of the source message **100.**
The inventors have now found that the user of the system can control the pace of annotation when the source message **100** has been assigned a duration, meaning here a period of time, wherein such a duration is modifiable by the user. For the purpose of the invention, the term "pace of annotation" refers to the pace at which the source message **100** is interpreted.

In a preferred embodiment according to the invention, the visualisation system **1** comprises a source module **10,** which is provided with a first interface **11** for displaying a source message **100.** Said source message **100** can be in any format. As a non-limiting example, the system may provide a source message in audio or video format, for which the student has to provide annotation. Preferably, the source message **100** is a text.

The visualisation system **1** further comprises an annotation module **20,** which is provided with a second interface **21** for recording a first annotation **22** of the source message **100** and for displaying said first annotation **22** of said source message **100.** Although the annotation module **20** is configured to be able to record and display a first annotation **22** in audio, video or text format, said first annotation **22** is preferably recorded and displayed in the form of video images. However, said first annotation **22** can be recorded and displayed in audio or text format, with the proviso that the source message **100** is displayed in video format. This is the case when the source message **100** is in sign language and has to be annotated by the student in text or in audio format.

The visualisation system **1** further comprises a time display module **30,** which is provided with a third interface **31** for indicating a time lapse **110.** The term time lapse is used herein to denote a certain extent in the time dimension, i.e. a certain duration, relative to which the progress of a source message or an annotation may be referenced. Preferably, said time lapse **110** is displayed by use of a time axis **32,** although other graphical representations may be used to the same effect.

For the purpose of the invention, the term "interface" refers here to means for communicating information, which is the result of the technical processes of the visualisation system **1,** to the user. In particular, the interface presents technical data, such as the value of the system's internal variables or registers that point to specific positions in the messages and annotations on which the system operates. The interface also ensures interaction with the user of the system, for example by allowing the user to manipulate such variables. Said interface typically is a graphical user interface (GUI). According to a preferred embodiment of the invention, said visualisation system **1** makes use of a screen. Typically, all interfaces described herein are displayed in the same screen, for example as separate windows on a windows-based GUI platform. Alternatively, the various interfaces described herein may use a plurality of screens. In order to obtain user input, the interfaces may further comprise controllers, which may include the human interface devices commonly found in computer systems (e.g., keyboards, mice, touchpads, touchscreens, etc.) as well as more specialized peripherals (e.g., head motion trackers, eye movement trackers, foot pedals, etc.).

The time display module **30** and the source module **10** are linked.

According to one embodiment of the invention, the source module **10** displays a source message **100** in the audio or video format, said source message **100** being inherently characterized by a duration and a natural playback speed. The time display module **30** displays a time lapse **110** which corresponds to the duration of the source message **100,** thereby linking any position in the source message **100** to a corresponding position of the time lapse **110.** The user can thus select a certain position in the source message **100,** either by selecting it directly in the first interface **11,** or by selecting its corresponding position in the time lapse **110** in the third interface **31** of the time display module **30.**

According to a preferred embodiment of the invention, the source message **100** is a text file, with a source text that has to be annotated. The time display module **30** and the source module **10** are then linked by dividing the source message **100,** which is displayed in the first interface **11** of the source module **10,** in basic units and dividing the time lapse **110** in a same amount of basic time intervals, wherein every single one of said basic units is assigned to a corresponding time interval. It will be clear that the first basic unit of the source message **100** then corresponds to the first basic time interval of the time lapse **110** and that the last basic unit of the source message **100** then corresponds to the last basic time interval of the time lapse **110.**
As a result, a position in the source message **100,** corresponding to a particular basic unit, is linked to a particular position of the time lapse **110,** corresponding to a particular basic time interval. When the user indicates a certain position in the source message **100,** a corresponding position of the time lapse **110** will also be selected. Thus, portions of said source text **100** are thus provided with respective durations, which are defined by a starting position and an ending position in said time lapse **110.** Said portions comprise at least a basic unit.
When the source message **100** is a text file, a text character will typically form the basic unit of the source text, to which a basic unit interval in the form of a text character duration can be assigned. It will be clear that the total duration of the source text equals the sum of all text character durations. The inventors have found that a text displayed at normal reading and interpretation pace typically corresponds with an average text character duration of about 60ms per character; this could be considered as the "natural playback speed" of the text.

The source module **10** further comprises a moveable position indicator **12** for indicating a position in the text of the source message **100.** Said moveable position indicator **12** may indicate said position in the text by providing a change in colour of the displayed text. Preferably, said moveable position indicator **12** is a moving text pointer, placed close to a text character, thereby marking the position in the text.

The visualisation system **1** further comprises a controller for controlling the pace of annotation. Said controller for controlling the pace of annotation may refer to a controller that is dynamically and actively managed by the user. Examples include a foot pedal, which the user can use to increase or decrease the pace of annotation, buttons or trackballs. Said controllers are typically controllable by the feet.

Alternatively, said controller for controlling the pace of annotation may refer to a controller which may be part of the visualisation system **1,** and which functions by adjusting in an autonomous way the pace of annotation on the basis of the reactions of the user of the system. A non-limiting example of such a controller is an eye-tracking system, capable of measuring eye positions and eye movement.

For the purpose of the invention, the terms "dynamic control" or "dynamic management" refer to the possibility for the user of the system to adjust in real-time and preferably continuously the pace of annotation. The effect of dynamic control is that it allows the user to synchronize his annotations to the source message **100.**

For the purpose of the invention, the term "synchronous annotation" refers to a form of annotating wherein annotation is provided to a portion of the source message **100,** whereby the starting position and ending position of said portion of the source message **100** correspond with the starting position and ending position respectively, of the portion of the time lapse **110** that corresponds to said portion of the source message **100.** In other words, synchronous annotation provides for annotation within a time interval that is used naturally to communicate the source message **100,** f.e. orally or through reading. It is an advantage of the present invention that said time interval can be adjusted in real-time by the user of the system.

The following illustrates said dynamic control of the pace of annotation by the user when providing a source text with synchronous annotation. It will however be clear that the same can be applied with a source message **100** in audio or video format.

Figure 2a shows a third interface **31** of a time display module **30** indicating a time axis **32,** said axis being linked with a source message **100** according to the description here above, thereby assigning a duration to said source message **100.** Portions of the source message **100** have already been annotated, as can be seen on an annotation axis **60,** showing a set of annotations **61,62,63,** as well as on the time axis **32** (shown here as hatched blocks for clarity reasons). Due to the annotation being synchronous, the starting positions and ending positions of the annotations on the time axis **32** and the annotation axis **60** correspond, thereby linking the annotation module **20** and the time display module **30.** The annotation axis **60** is preferably displayed in the third interface **31.** The user can then select any position **64** in the time axis **32,** which is linked to a corresponding position in the source message **100** and decide to start recording an annotation. A synchronous annotation recording will start by activating both the moveable position indicator **64** in the source module **10,** which will then proceed at a natural pace of 60ms per text character, and by activating the annotation module. This is typically done by use of a record button. The recording will then start from the position **64** which is indicated by the moveable position indicator **12.** The recording of the new annotation is shown in Figure 2b. As the user has already annotated several parts of the source message **100,** he only has a limited amount of time to add a new annotation starting from position **64.** The recording of the new annotation would be interrupted the moment the newly recorded annotation overlaps with the upcoming, already recorded, annotation (annotation **61** on Figure 2a). The dynamic control of the visualization system **1** allows the user to, for this particular case, reduce the pace of annotation. The user thereby decreases the average pace of the moveable position indicator, meaning that the text is traversed at a slower tempo. The reduction of the pace then results in a, preferably continuous, recalculation of the available time which is visually represented in the annotation axis **60** and the time axis **32.** The annotation axis **60** is redrawn such that the extra time available for recording is visible on the annotation axis **60,** as is visible in the representation of the already recorded annotations **61,62,63** in Figure 2b.

According to a preferred embodiment of the invention, the visualisation system **1** is able to record and display more than one level of annotation. For this purpose, the system comprises a feedback module **50,** which is configured with a fourth interface **51** for recording and displaying a second annotation **52** to said source message **100** or to said first annotation **22.** Said second annotation **52** will be typically used by the teacher with the purpose of giving comment to the first annotation **22,** representing the work of the student, which was recorded by use of the annotation module **20.** Although the feedback module **50** is configured to be able to record and display a second annotation **52** in text, audio or video format, said second annotation **52** is preferably recorded and displayed in the form of video images.

Preferably, the annotations recorded by the annotation module **20** or by the feedback module **50** are accessible in the visualisation system **1.** This is typically done by displaying said recorded annotations in the third interface **31** of the time display module **30.** The annotations by the annotation module **20** and the annotations by the feedback module **50** are preferably represented in a separate track bar, being an annotation axis **60** and a feedback axis **65** respectively. Said time axis, annotation axis and feedback axis **32, 60, 65** can be displayed grouped in said third interface **31.**

The visualisation system further provides for consecutive annotation. For the purpose of the invention, the term "consecutive annotation" refers to a form of annotating, wherein the user adds an annotation which is linked to a certain position of the source message.

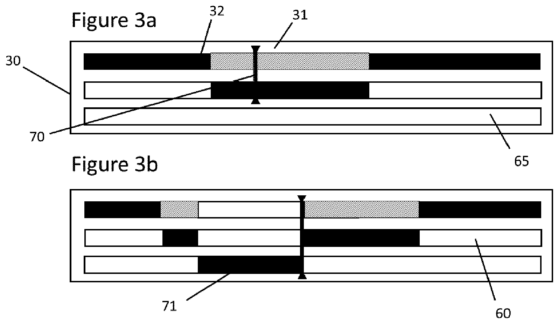

The following illustrates the use of consecutive annotations by the visualisation system **1.** Figure 3a shows a third interface **31** of a time display module **30** indicating a time axis **32,** an annotation axis **60** and a feedback axis **65.** A portion of the source message 100 has already been annotated synchronously as is visible on the time axis **32** (by use of hatched blocks for clarity reasons) and the annotation axis **60.** The user selects a position **70** on the time axis **32** and can start to make an instant comment. This new annotation is visible on the feedback axis (annotation **71**), as illustrated in Figure 3b, and causes a break in the visual representation of the source message in the time axis **32** and the annotation in the annotation axis **62.**

In an alternative embodiment of the invention, the visualization system **1** comprises at least one additional module with an interface for recording and displaying a third level of annotations. Said at least one additional module is configured to be able to record and display a third level of annotations in any format.

The invention also pertains to methods of using the visualization system described above. A typical use of for recording a synchronous annotation to a source text with the visualization system **1** may comprise the following: in a first step, the source module **10** is activated by displaying a source text in the first interface **11.** The user then selects a starting position where he would like to add an annotation. This is done by selecting a position in the source text, displayed in the first interface **11,** or by selecting the corresponding position on the time axis **32,** displayed in the third interface **31.** It will be clear that the corresponding position on the time axis **32** or in the source text respectively will also be selected. In a second step, the user activates the moveable position indicator **64** in the source module **10,** which will then proceed at a natural pace of 60ms per text character, and activates a command in the second interface **21** of the annotation module **20,** which initiates the recording of an annotation, starting from said selected starting position. A controller for the pace of annotation will adjust the pace of annotation, either by dynamic control by the user or by automatic adjustment on the basis of the user's actions. Due to the dynamic regulation of the annotation pace, said recorded annotation will be synchronised with the annotated portion of the source text and will not overlap with other annotations. The same portion of the source text will therefore not have two annotations in a single track. The user can end the recording by deactivating the command in the second interface **21** of the annotation module **20.**

It will be clear to the skilled in the art that the present invention is not limited to annotating content in text format into sign language. The content that is displayed in the source module **10** and that has to be annotated can also be in other formats, such as video images or audio.

According to an embodiment of the present invention, the student is presented with content in the source module **10** in audio or video format, which he has to annotate in sign language in the annotation module **20.**

According to another embodiment of the present invention, the source module **10** presents the student with content in video format showing a message in sign language, which the student has to annotate in text or in audio format.

The present invention also pertains to a computer program, optionally stored on a computer-readable medium, comprising code means adapted to cause a processor to perform the functions of the visualisation system **1** as described above. The processor may be part of a computer system (such as a personal computer, desktop computer, laptop computer, notebook, tablet, smart phone, and the like), whereby the interfaces described herein are implemented in the GUI environment on the screen of said computer system.

While the invention has been described hereinabove with reference to specific embodiments, this is done to illustrate and not to limit the invention, the scope of which is defined by the accompanying claims. The skilled person will readily appreciate that different combinations of features than those described herein are possible without departing from the scope of the claimed invention.

## Claims

1. A visualisation system (1) for annotating a source message (100), comprising
∘ a source module (10), provided with a first interface (11) for displaying said source message (100),
∘ an annotation module (20), provided with a second interface (21) for recording and displaying a first annotation (22) of said source message (100);
∘ a time display module (30), provided with a third interface (31) for indicating a time lapse (110);
**characterized in that** said source message (100) is linked to said time lapse (110), thereby providing portions of said source message (100) with respective durations defined by a starting position and an ending position in said time lapse (110);
**and in that** the pace of annotating said source message (100) is dynamically controllable by the user of the system.

2. The visualisation system (1) according to claim 1, wherein said visualisation system (1) further comprises a feedback module (50), provided with a fourth interface (51) for recording and displaying a second annotation (52) to said first annotation (51) in the form of text, audio or video images.

3. The visualisation system (1) according to claim 1 or claim 2, wherein said source message (100) is in the form of video images, and the annotation is in the form of text, audio or video images.

4. The visualisation system (1) according to claim 1 or claim 2, wherein said source message (100) is in the form of audio or text, and the annotation is in the form of video images.

5. The visualisation system (1) according to claim 1 or claim 2, wherein said source message (100) is a text, which is divided in a plurality of basic units and wherein said time lapse (110) Is divided in a plurality of basic time intervals, wherein each basic unit is linkable to a corresponding basic time interval, thereby providing each position in said source text with a corresponding position in said time lapse (110).

6. The visualisation system (1) according to claim 5, wherein said basic unit is a text character.

7. The visualisation system (1) according to claim 6, wherein a natural pace of annotation of the text of the source message (100) corresponds with a basic time interval having a duration of 60ms per text character.

8. The visualisation system (1) according to any one of claims 5 to 7, wherein said source module (100) further comprises a moveable position indicator (12) for indicating a position in the source text.

9. The visualisation system (1) according to any one of the preceding claims, wherein the visualisation system (1) further comprises a controller for controlling the pace of annotation.

10. The visualisation system (1) according to claim 9, wherein said controller for controlling the pace of annotation comprises a system for tracking eye movement.

11. The visualisation system (1) according to claim 10, wherein said controller for controlling the pace of annotation comprises at least one pedal for manipulation by foot.

12. The visualisation system (1) according to any one of the preceding claims, wherein said annotation is synchronous.

13. The visualisation system (1) according to claims 1 to 11, wherein said annotation is consecutive.

14. A computer program product comprising code means configured to cause a processor to perform the functions of said visualisation system (1) according to any one of claims 1-13.
